# EUROPEAN PATENT SPECIFICATION

(11) **EP 1 791 772 B1**
(45) Date of publication and mention of the grant of the patent: **11.08.2010**
(21) Application number: 05779679.9
(22) Date of filing: 16.09.2005
(51) Int. Cl.: B65D 90/38

(54) **Method related to unloading a container containing liquefied gas fluid**
Verfahren im Zusammenhang mit der Entleerung eines ein Flüssiggas enthaltenden Behälters
Méthode liée au déchargement d'un conteneur contenant du gaz liquéfié

(30) Priority: 21.09.2004 NO 20043956
(43) Date of publication of application: 06.06.2007
(73) Proprietor: Ravndal, Ola, 4307 Sandnes (NO)
(72) Inventor: Ravndal, Ola, 4307 Sandnes (NO)
(74) Representative: Klunker . Schmitt-Nilson . Hirsch
(86) International application number: PCT/NO2005/000341
(87) International publication number: WO 2006/033577

(56) References cited:
- WO-A1-84/04515
- WO-A1-85/01035
- DE-A1- 2 427 041
- DE-A1- 3 209 591
- US-A- 3 158 296
- US-A- 4 079 856
- US-A- 4 254 887
- US-A- 5 255 722
- US-A- 5 899 243
- US-B1- 6 527 002

## Description

The present invention concerns a method of using a volume-displacing device in containers, especially tanks in LPG (Liquefied Petroleum Gas) ships. More particularly, it concerns a method related to unloading of a transport ship having at least one fluid container containing a first liquefied gas fluid and reloading said fluid container with a second liquefied gas fluid that is chemically incompatible with said first liquefied gas fluid.

In this document, the term container is used for a device suitable to contain a pressurized fluid.

The object of the invention is to reduce free space above a liquid level in a container exemplified by, but not limited to, a cargo tank in an LPG ship, thereby reducing the container volume that must be cleaned in connection with a cargo switch from a first cargo to a second cargo, wherein said second cargo chemically is not compatible with said first cargo, and thereby also reducing evaporation of the liquid phase of a fluid transported in the container.

In a container for petrochemical products, for example a cargo tank onboard on an LPG tanker, gas will be displaced from the cargo tank during filling, when liquid is supplied (for example the liquid phase of a gas). The gas being displaced oftentimes is toxic and must be handled in a proper manner in order to avoid environmental pollution in areas where loading and unloading is carried out. Typically, this is handled by allowing the cargo terminal to receive the displaced tank atmosphere when loading the tank.

Relatively frequently, a second and new cargo to be supplied to a container is not chemically compatible with a first and preceding cargo. In such situations, having unloaded or discharged the first cargo, and before filling the second cargo, the container must be subjected to extensive venting and cleaning, which is termed "purging" in the art, in order not to contaminate the second cargo filled into the container with product residues from the first cargo.

In situations where the second cargo is not chemically compatible with the first cargo, the following known and comprehensive cleaning procedure must be carried out:
- After having substantially emptied the container, the container is heated up in order to evaporate and discharge a potential residual liquid phase from the first cargo;
- the container is vented ("purged") with an inert gas, which is a neutral gas that does not react with any other compounds, having a volume corresponding to several times the total volume of the container;
- in those situations where visual inspection is to be conducted, the container must be further vented with atmospheric air, the container environment thus allowing for safe admission of inspection personnel. The ventilation is carried out with a volume atmospheric air corresponding to several times the total volume of the container;
- after having conducted a potential visual inspection, the container must be vented again with an inert gas in an amount corresponding to several times the total volume of the container; and
- the container then is cooled down, and the inert gas is replaced by the prevailing gas phase of the next cargo in order to avoid contamination from inert gas and/or air. This step is termed "gassing up" in the art.

There are several disadvantages related to the procedure according to the above-mentioned prior art. The main disadvantage is related to the large volumes of inert gas and air required during purging. Depending on the size of the tank, the procedure according to prior art may have a duration exceeding 72 hours for an LPG tanker. During this long period, the ship is inactive and in a form of "quarantine" in which the ship normally is not allowed to stay at quay at the terminal. In some instances, this results in a choice being made for the ship to leave the terminal and instead combining the transit time with a so-called ballast voyage prior to the next cargo loading. In addition to negative commercial aspects, this also involves a negative environmental aspect owing to the pollution generated by the combustion engine of a ship.

During transport of a fluid comprised by a liquid phase and a gas phase, which is the case for LPG, most of the container volume will normally be occupied by fluid in liquid phase. A portion of the fluid, however, will always be comprised of a gas phase located above the liquid phase when the tank is in its position of use. During transport of LPG according to prior art, some of the liquid phase will evaporate and enter into gas phase. This is termed an "evaporation product" in the art. After discharging or unloading, the evaporation product represents a negative environmental aspect and also negative commercial aspects, insofar as the evaporation product is vented out of the container during change of cargo.

US 6,527,002 B1 discloses an apparatus for use with a container which is to prevent evaporative losses of a liquid stored in the container. The apparatus employs a bladder inside the container. The bladder is filled with air before a liquid is filled in the container. During loading of the container the air is released from the bladder. A pressure control unit is provided to control the supply of air to the bladder such that the pressure in the bladder is maintained above the vapour pressure inside the container. The bladder is maintained in an inflated condition such that it fills the space above the liquid in the container.

The object of the invention is to remedy or at least reduce one or more disadvantages of prior art.

The object is achieved through features disclosed in the description below and in the subsequent claims.

The invention concerns a method one step of which is related to discharging a container containing a first fluid present in a liquid state and a gas state, wherein a volume portion of said first fluid of the container is replaced by a second fluid filled into a bellows disposed within said container, the second fluid being an inert gas.

In a preferred method, the bellows is filled with the second fluid at a volume rate substantially corresponding to the volume rate at which the liquid phase of said first fluid is removed during unloading. In an alternative method, the bellows is filled with the second fluid not until after some of, or substantially all of, a liquid phase of said first fluid is conveyed out of the container.

The bellows may be arranged so as to separate said first fluid from a second fluid transported into the bellows from the exterior of the container, said second fluid being comprised of an inert gas. The bellows, when filled, may be arranged so as to occupy a substantial volume portion of the second fluid and, when emptied, may be arranged so as to contain substantially no volume portion of said second fluid. When filled, said volume portion in some cases may be substantially equal to the total volume of the container, or it may be in the order of ca. 75-100% of the total volume of the container. This causes the volume requiring purging between discharging a first cargo and loading of a second cargo, in which said cargos are chemically incompatible, to be reduced and confined to the annulus defined by an internal surface of the container and an external surface of the bellows filled with the second fluid.

During transport of a fluid existing in a liquid phase and a gas phase in the container, the bellows may be arranged so as to reduce the volume available for the fluid existing in the gas phase. By filling the bellows with a fluid until pressure balance is achieved, evaporation from the liquid phase will diminish considerably during unloading and will thus reduce the environmental and commercial consequences, as mentioned hereinbefore. For example, and not restricted thereto, said second fluid filled into the bellows may be an inert gas.

The bellows may be comprised of a polymer material suitable for use with the fluid in question.

In the following, a non-limiting example of a preferred embodiment is described and depicted in the accompanying drawings, in which:
Figure 1a shows a principle drawing of a container according to the present invention, in which the container is provided with an internal bellows filled with a fluid only in a top portion of the container;
Figure 1b shows a section I-I through the container of figure 1a;
Figure 2a shows the container of figure 1a as the bellows is filled with a fluid comprising, in volume, approximately 60% of the total volume of the container;
Figure 2b shows a section II-II through the container of figure 2a;
Figure 3a shows the container of figure 1a, but in which the bellows is filled with a volume substantially corresponding to the internal volume of the container; and
Figure 3b shows a section III-III through the container of figure 3a.

In the figures, reference numeral 1 denotes a container provided with a bellows 5 disposed within the container 1. For the sake of clarity, the container is shown having a manhole 3 only. A person skilled in the art will understand that a container for storing of fluids also must be provided with a number of connection points for apparatuses required to operate the container.

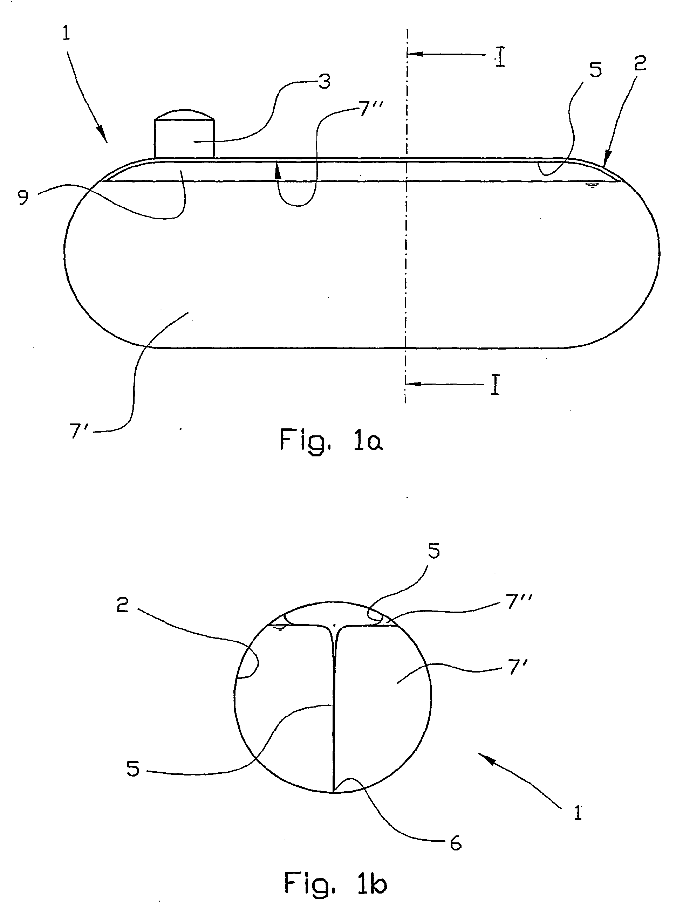

In figures 1a and 1b, the container 1 is shown filled with a first fluid 7', 7", and the bellows 5 filled with a second fluid 9, which is an inert gas. The first fluid is comprised of a liquid phase 7' and a gas phase 7", in which the volume portion of the liquid phase 7' comprises the main portion of said first volume. As best shown in figure 1b, the bellows 5 is filled with an amount of the second fluid, said amount occupying large parts of the volume that otherwise, i.e. without the bellows 5, would have been filled with gas phase 7" of the first fluid 7. As a result of the natural characteristics of the bellows 5, the bellows 5 is in pressure balance whilst positioned above the liquid phase 7' of the first fluid 7. In a transport situation, this results in considerably reduced evaporation from the liquid phase 7'. As mentioned hereinbefore, this has positive environmental and commercial effects.

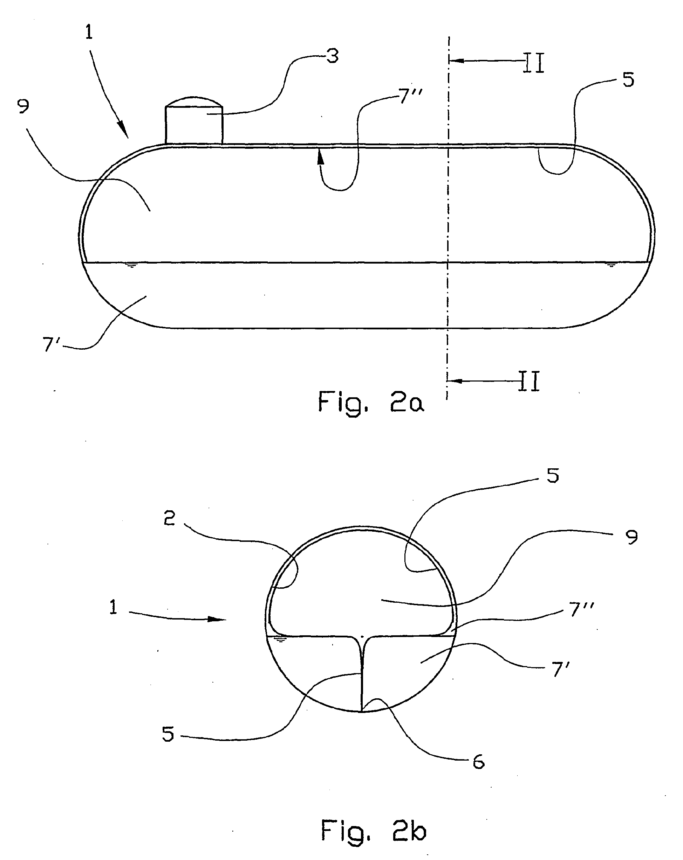

In figures 2a and 2b, the container 1 is shown in an embodiment in which the container 1 is filled only partially with the first fluid 7', 7", and in which the bellows 5 is filled with the second fluid 9. The figures illustrate a typical situation while emptying the container 1, in which the bellows 5 is filled with the second fluid 9 at a volume rate substantially corresponding to the volume rate at which the said first fluid 7 is removed during unloading. Moreover, the figures may be illustrative of a transport situation in which the container 1 is filled only partially with the first fluid 7', 7", and in which the bellows 5 is used to displace the volume of the container 1 that otherwise, i.e. without the bellows 5, would have been occupied by the gas phase 7" of the fluid.

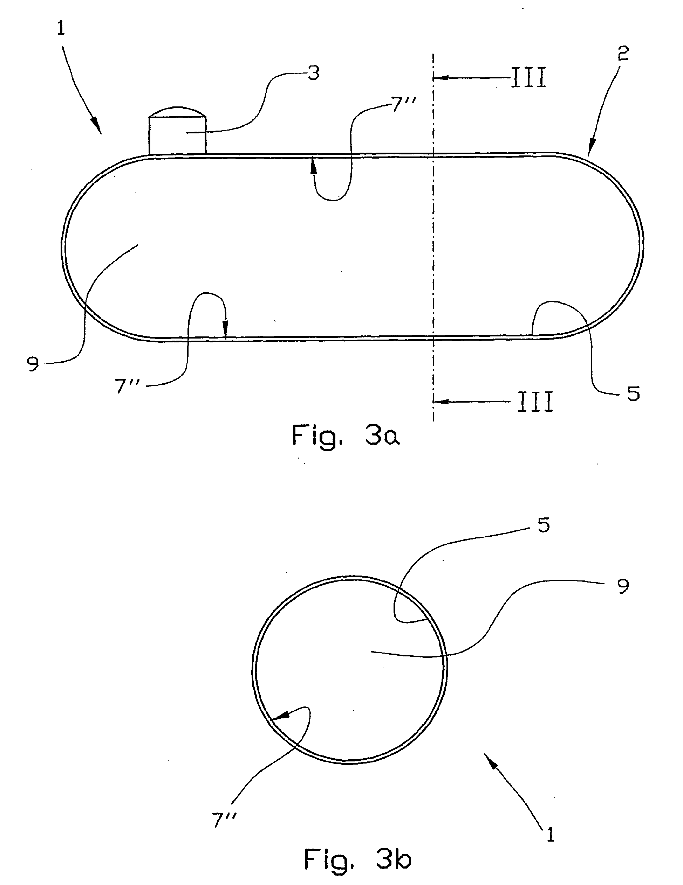

In figures 3a and 3b, the bellows 5 is filled with the fluid 9, the volume of which substantially corresponds to the internal volume of the container 1. The fluid is transported into and out of the bellows 5 through a valve device (not shown) known per se, and which projects outwardly through a recess in a portion of the mantle 2 of the container 1. In other embodiments not shown herein, the bellows 5 may be provided with two or more valve devices for fluid communication into and out of the bellows 5.

In figures 1b and 2b, a lower portion of the bellows 5 is shown attached to a bellows attachment portion 6 in the mantle 2 of the container 1. The object of this is, among other things, to facilitate a correct filling of the bellows 5. Even though figures 1b and 2b show a preferred embodiment of bellows attachment, the bellows 5 may be attached to the container 1 in other portions thereof, or it may be disposed freely movable in the container 1.

In a method step related to discharging, the first fluid 7', 7" leaving the container 1 is replaced substantially continuously by the second fluid 9 filled into the bellows 5. In alternative methods (not shown), the bellows 5 is filled with the second fluid 9 not until after parts of, or all of, the first fluid has been discharged from the container 1. Independent of which method is used, a bellows 5 that according to the present invention is filled with a fluid, will reduce the volume requiring venting in connection with a change from a first cargo to a second cargo not being compatible with said first cargo. As shown in principle in figures 3a and 3b, the volume requiring venting or purging will be reduced to the annulus defined between an internal surface of the container 1 and an external surface of bellows 5, a volume that is considerably reduced relative to the total container volume requiring venting when using prior art techniques without the use of a bellows. Even though figures 3a and 3b show a bellows 5 occupying substantially all of the internal volume of the container 1, a person skilled in the art will understand that said annulus between the container and the bellows may be larger than that shown in said figures.

The second fluid 9, an inert gas, that is filled into the bellows 5 does not become contaminated by external fluids. For this reason, the second fluid 9 may be re-used or be used for venting purposes in other containers (not shown).

Furthermore, the bellows 5 is suitable for keeping two liquids separated in one container. This, for example, may concern intermediate storage of ballast water to be processed in a purification plant, or it may concern intermediate storage of produced water.

## Claims

1. A method related to unloading of a transport ship having at least one fluid container (1) containing a first liquefied gas fluid (7', 7") and reloading said fluid container (1) with a second liquefied gas fluid that is chemically incompatible with said first liquefied gas fluid (7', 7''), **characterized in that** the method comprises the steps of:
- a) introducing during unloading of said first liquefied gas fluid (7', 7") an inert gas (9) into a bellows (5) which is situated inside the fluid container (1), such that an expansion of the bellows (5) reduces an internal volume of the fluid container (1) which is available for a gas phase (7") of the first liquefied gas fluid (7', 7") to an annulus which is defined by an internal surface of the container (1) and an external surface of the bellows (5) filled with said inert gas (9);
- b) venting said annulus by an inert gas; and
- c) replacing the inert gas in said annulus by a gas phase of the second liquefied gas fluid.

2. The method according to claim 1, **characterized in that** the method further comprises the following steps between the steps b) and c):
- the container (1) is further ventilated by using atmospheric air;
- the bellows (5) is emptied for said inert gas (9), preferably simultaneously with the filling of the container (1) with said atmospheric air, such that the environment in the container (1) allows safe entry for inspection personnel;
- a visual inspection is conducted;
- the bellows (5) is filled for thus to occupy a portion of the internal volume of the container (1); and
- the container (1) is ventilated by venting an annulus, which is defined by the internal surface of the container (1) and the external surface of the filled bellows (5), using an inert gas.

3. The method according to claim 1 or 2, **characterized in that** said inert gas (9) is introduced into the bellows (5) at a volume rate substantially corresponding to the volume rate at which a liquid phase (7') of said first fluid (7', 7'') is discharged from the fluid container (1).

4. Method according to claim 1 or 2, **characterized in that** said inert gas (9) is introduced into the bellows (5) at a point in time during the discharge of a liquid phase (7') of said first fluid (7', 7") from the fluid container (1).

5. Method according to claim 1 or 2, **characterized in that** said inert gas (9) is introduced into the bellows (5) after substantially all of a liquid phase (7') of said first fluid (7', 7") is discharged from the fluid container (1).

6. Method according to any one of claims 1 to 5, **characterized in that** the bellows (5) is arranged such that a remaining volume of a gas phase (7") of said first fluid (7', 7") required to be removed from the fluid container (1) in connection with a change of cargo from said first fluid (7', 7") to said second liquefied gas fluid is reduced.

## Patentansprüche

1. Verfahren bezüglich dem Entladen eines Transportschiffes mit zumindest einem Fluidbehälter (1), der ein erstes verflüssigtes Gasfluid (7', 7") beinhaltet, und Wiederbeladen des Fluidbehälters (1) mit einem zweiten verflüssigten Gasfluid, das mit dem ersten verflüssigten Gasfluid (7', 7") chemisch inkompatibel ist, **dadurch gekennzeichnet, dass** das Verfahren die Schritte umfasst:
- a) Während des Entladens des ersten verflüssigten Gasfluids (7', 7"), einbringen eines inerten Gases (9) in einen Balg (5), der innerhalb des Fluidbehälters (1) gelegen ist, so dass eine Ausdehnung des Balgs (5) ein inneres Volumen des Fluidbehälters (1), das für eine Gasphase (7") des ersten verflüssigten Gasfluids (7', 7") zur Verfügung steht, auf einen Ringraum reduziert, der durch eine innere Oberfläche des Behälters (1) und eine äußere Oberfläche des mit dem inerten Gas (9) gefüllten Balgs (5) definiert ist;
- b) Belüften des Innenraums mittels eines inerten Gases; und
- c) Ersetzen des inerten Gases in dem Ringraum durch eine Gasphase des zweiten verflüssigten Gasfluids.

2. Verfahren nach Anspruch 1, **dadurch gekennzeichnet, dass** das Verfahren weiterhin die folgenden Schritte zwischen den Schritten b) und c) umfasst:
- der Behälter (1) wird ferner durch Verwendung von atmosphärischer Luft belüftet;
- der Balg (5) wird von dem inerten Gas (9) geleert, vorzugsweise gleichzeitig mit dem Füllen des Behälters (1) mit der atmosphärischen Luft, so dass die Umgebung in dem Behälter (1) einen sicheren Zutritt für Inspektionspersonal zulässt:
- eine visuelle Inspektion wird durchgeführt;
- der Balg (5) wird gefüllt, um folglich einen Anteil des inneren Volumens des Behälters (1) einzunehmen; und
- der Behälter (1) wird durch Belüften eines Ringraums, der durch die innere Oberfläche des Behälters (1) und die äußere Oberfläche des gefüllten Balgs (5) definiert ist, unter Verwendung eines inerten Gases belüftet.

3. Verfahren nach Anspruch 1 oder 2, **dadurch gekennzeichnet, dass** das inerte Gas (9) mit einer Volumenrate in den Balg (5) eingebracht wird, die im Wesentlichen der Volumenrate entspricht, mit der eine flüssige Phase (7') des ersten Fluids (7', 7") aus dem Fluidbehälter (1) entladen wird.

4. Verfahren nach Anspruch 1 oder 2, **dadurch gekennzeichnet, dass** das inerte Gas (9) zu einem Zeitpunkt in den Balg (5) eingebracht wird, während eine flüssige Phase (7') des ersten Fluids (7', 7") aus dem Fluidbehälter (1) entladen wird.

5. Verfahren nach Anspruch 1 oder 2, **dadurch gekennzeichnet, dass** das inerte Gas (9) in den Balg (5) eingebracht wird, nachdem im Wesentlichen alles einer flüssigen Phase (7') des ersten Fluids (7'. 7") aus dem Fluidbehälter (1) entladen ist.

6. Verfahren nach einem der Ansprüche 1 bis 5, **dadurch gekennzeichnet, dass** der Balg (5) derart angeordnet ist, dass ein verbleibendes Volumen einer Gasphase (7") des ersten Fluids (7', 7"), das im Zusammenhang mit einem Frachtwechsel von dem ersten Fluid (7', 7") zu dem zweiten verflüssigten Gasfluid aus dem Fluidbehälter entfernt werden muss, reduziert wird.

## Revendications

1. Procédé lié au déchargement d'un navire de transport, possédant au moins une citerne de fluide (1) contenant un premier fluide du type gaz liquéfié (7', 7"), et au rechargement de ladite citerne de fluide (1) par un second fluide du type gaz liquéfié qui est chimiquement incompatible avec ledit premier fluide du type gaz liquéfié (7', 7''), **caractérisé en ce que** le procédé comprend les étapes consistant :
- a) à introduire, pendant le déchargement dudit premier fluide du type gaz liquéfié (7', 7"), un gaz inerte (9) dans une enveloppe déformable (5) qui est située à l'intérieur de la citerne de fluide (1), de façon telle qu'une expansion de l'enveloppe déformable (5) réduise un volume intérieur de la citerne de fluide (1), qui est disponible pour une phase gazeuse (7") du premier fluide du type gaz liquéfié (7', 7"), à un anneau qui est délimité par une surface intérieure de la citerne (1) et une surface extérieure de l'enveloppe déformable (5) remplie dudit de gaz inerte (9) ;
- b) à purger ledit anneau au moyen d'un gaz inerte ; et
- c) à remplacer le gaz inerte situé dans ledit anneau par une phase gazeuse du second fluide du type gaz liquéfié.

2. Procédé suivant la revendication 1, **caractérisé en ce que** le procédé comprend en outre les étapes suivantes entre les étapes b) et c) :
- la citerne (1) est en outre purgée en utilisant de l'air atmosphérique ;
- l'enveloppe déformable (5) est vidée dudit gaz inerte (9), de préférence simultanément au remplissage de la citerne (1) au moyen dudit air atmosphérique, de façon telle que le milieu ambiant situé dans la citerne (1) permette une entrée sure pour un personnel d'inspection ;
- une inspection visuelle est effectuée ;
- l'enveloppe déformable (5) est remplie pour occuper ainsi une partie du volume intérieur de la citerne (1) ;
- la citerne (1) est purgée en purgeant un anneau qui est délimité par la surface intérieure de la citerne (1) et la surface extérieure de l'enveloppe déformable (5) remplie, en utilisant un gaz inerte.

3. Procédé suivant la revendication 1 ou 2, **caractérisé en ce que** ledit gaz inerte (9) est introduit dans l'enveloppe déformable (5) à un débit volumique correspondant sensiblement au débit volumique auquel une phase liquide (7') dudit premier fluide (7', 7") est extraite de la citerne de fluide (1).

4. Procédé suivant la revendication 1 ou 2, **caractérisé en ce que** ledit gaz inerte (9) est introduit dans l'enveloppe déformable (5) à un instant situé pendant l'extraction d'une phase liquide (7') dudit premier fluide (7', 7") hors de la citerne de fluide (1).

5. Procédé suivant la revendication 1 ou 2, **caractérisé en ce que** ledit gaz inerte (9) est introduit dans l'enveloppe déformable (5) après que sensiblement la totalité d'une phase liquide (7') dudit premier fluide (7', 7") est extraite de la citerne de fluide (1).

6. Procédé suivant l'une quelconque des revendications 1 à 5, **caractérisé en ce que** l'enveloppe déformable (5) est agencée de façon telle que soit réduit un volume restant d'une phase gazeuse (7") dudit premier fluide (7', 7") qui doit être extraite de la citerne de fluide (1) en liaison avec un changement de chargement dudit premier fluide (7', 7") audit second fluide du type gaz liquéfié.
